# EUROPEAN PATENT SPECIFICATION

(11) **EP 1 889 042 B1**
(45) Date of publication and mention of the grant of the patent: **07.08.2013**
(21) Application number: 06760737.4
(22) Date of filing: 08.06.2006
(51) Int. Cl.: G01N 27/401, G01N 27/403

(54) **ELECTROCHEMICAL CELL AND REFERENCE CELL WITH FLOWING LIQUID JUNCTION**
ELEKTROCHEMISCHE ZELLE UND REFERENZZELLE MIT EINER FLÜSSIGKEITSBRÜCKE
PILE ÉLECTROCHIMIQUE ET PILE DE RÉFÉRENCE AVEC JONCTION LIQUIDE D ÉCOULEMENT AMÉLIORÉE

(30) Priority: 09.06.2005 US 688968 P
(43) Date of publication of application: 20.02.2008
(73) Proprietor: ROSEMOUNT ANALYTICAL INC., Irvine, California 92606 (US)
(72) Inventor: FENG, Chang-Dong, Long Beach, CA 90903 (US); JANTZ, Robert, F., Tustin, CA 92782 (US)
(74) Representative: Vossius & Partner
(86) International application number: PCT/US2006/022418
(87) International publication number: WO 2006/135724

(56) References cited:
- US-A- 3 208 927
- US-A- 3 492 216
- US-A- 4 390 406
- US-A- 5 139 641
- US-A- 5 830 338

## Description

### BACKGROUND OF THE INVENTION

Electrochemical cells form the basis of a variety of analytical sensors. Electrochemical cells generally have two or more electrodes of the cell and are coupled to an analyzer that measures an electrical characteristic of the cell to infer a property of a sample within, or otherwise coupled to, the cell. Many electrochemical cells include a measurement electrode and a reference electrode. The reference electrode will generally include a chamber that houses a reference electrode fill solution. A junction, of some sort, allows electrochemical interaction between a sample solution and the fill solution. Electrochemical cells can be used for oxidation/reduction potential (ORP) sensors, pH sensors, or other suitable sensors.

One type of junction used with reference electrodes of electrochemical cells is known as a liquid junction. A liquid junction uses a relatively small passageway that is in fluidic communication with both the sample solution and the reference fill solution. In order to achieve a stable potential at the liquid junction, it is generally preferred that at least some flow of fill solution through the passageway into the sample solution be induced. With a "flowing" liquid junction, the reference electrode fill solution constantly flows through the liquid junction into the sample solution. However, in order for the flowing liquid junction to work properly, the fill solution must be free to flow through the junction pore(s) to overcome the diffusion of cations and anions in the fill solution. If the passageway becomes blocked, ions in the fill solution will diffuse differently. The electrical resistance of the junction will increase. This can cause electrochemical readings to drift and become noisy. Severe fouling can sometimes completely block the liquid junction, breaking the electrical connection between the electrode and the sample, and making the electrode unusable. Plugging can come from various sources, including: suspended solids in a sample or solids resulting from a chemical reaction involving the fill solution. Plugged junctions are difficult to clean.

Therefore, there is a need to provide electrochemical cells with the longevity advantage of liquid junctions, but without such cells being as susceptible to fouling induced by obstructions within the liquid junction. Such an electrochemical cell would enjoy the advantages of longevity, stable reference potential, and relatively low maintenance requirements.

### SUMMARY OF THE INVENTION

An electrochemical cell includes a measuring electrode and a reference electrode. The reference electrode includes a flowing liquid junction between a reference fill fluid and a sample. The flowing liquid junction is configured to inhibit particles from blocking or obstructing it.

The flowing liquid junction has a diameter that generally increases from an aperture proximate the fill fluid to an aperture proximate the sample. One example of such a configuration is a tapered flowing liquid junction.

### BRIEF DESCRIPTION OF THE DRAWINGS

FIG. 1 is a diagrammatic view of an electrochemical cell environment, with which embodiments of the present invention are particularly useful.
FIG. 2 is a diagrammatic view of a flowing liquid junction of a reference electrode of an electrochemical cell in accordance with the prior art.
FIG. 3 is a diagrammatic view of the junction illustrated in FIG. 2 further illustrating an obstruction to the flow passageway.
FIG. 4 is a diagrammatic view of a flowing liquid junction of a reference electrode of an electrochemical cell in accordance with a comparative example .
FIG. 5 is a diagrammatic view of a flowing liquid junction of a reference electrode of an electrochemical in accordance with another comparative example.
FIG. 6 is a diagrammatic view of a flowing liquid junction of a reference electrode of an electrochemical cell in accordance with another embodiment of the present invention.
FIG. 7 is a diagrammatic view of a flowing liquid junction of a reference electrode of an electrochemical cell in accordance with yet another embodiment of the present invention.
FIG. 8 is a diagrammatic view of a flowing liquid junction of a reference electrode of an electrochemical cell in accordance with yet another embodiment of the present invention.

### DETAILED DESCRIPTION OF ILLUSTRATIVE EMBODIMENTS

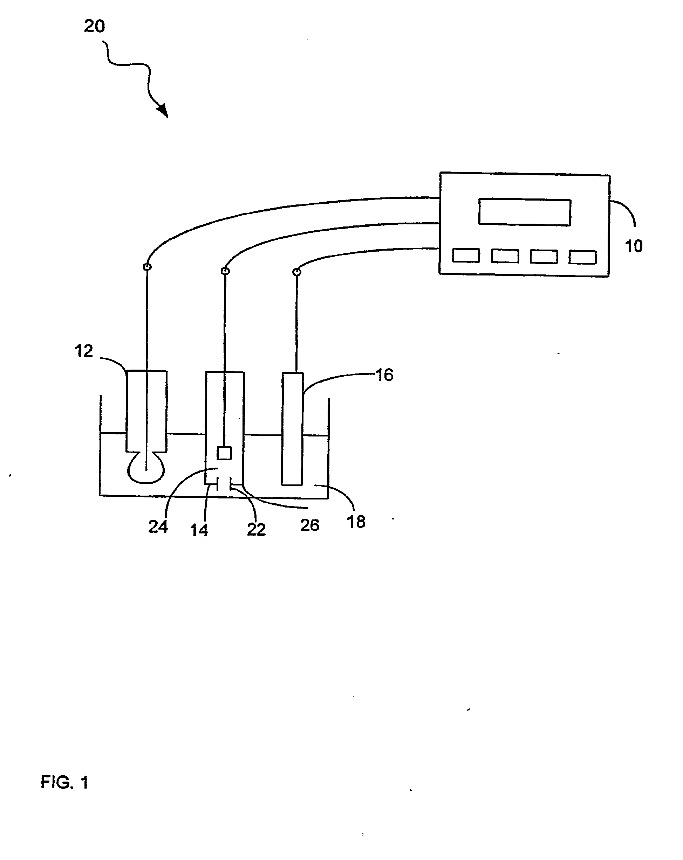

FIG. 1 is a diagrammatic view of an electrochemical cell being used to analyze pH. Those skilled in the art will recognize that embodiments of the present invention can be practiced with various types of chemical analysis, and embodiments of the present invention are certainty not limited to the illustrative pH analyzer application illustrated in FIG. 1. Meter 10 is coupled to measuring electrode 12, working electrode 14 and temperature sensor 16. Each of measurement electrode 12, reference electrode 14 and temperature sensor 16 are disposed within sample 18. In most applications, pH is simply determined by measuring the voltage of electrochemical cell 20. The voltage of cell 20 is generally directly proportional to the pH of sample liquid 18. Meter 10 measures the voltage and uses a temperature-dependent factor to convert the voltage to pH. Because cell 20 has a relatively high internal resistance, meter 10 has a very high input impedance. Although FIG. 1 illustrates separate measuring and reference electrodes 12, 14, such electrodes are sometimes combined, along with temperature sensor 16 within a single body. Such sensors are called combination electrodes.

The voltage of cell 20 is the algebraic sum of the potentials of measuring electrode 12, reference electrode 14, and the liquid junction. The potential of measuring electrode 12 depends primarily on the pH of sample 18. The potential of reference electrode 14 is unaffected by pH, so it provides a stable reference voltage. The liquid junction potential depends in a complex way on the identity and concentration of the ions in sample liquid 18. The liquid junction potential is always present, but is usually small and relatively constant if cell 20 is properly designed. All three potentials depend on temperature.

Measuring electrode 12 is generally application-specific. In an application such as that illustrated in FIG. 1, where pH is measured, measuring electrode will include a thin piece of pH-sensitive glass, which is blown onto the end of a length of glass tubing. Sealed inside of electrode 12 is a solution of potassium chloride buffered at pH 7. A piece of silver wire plated with silver chloride contacts the solution. However, where electrochemical cell 20 is used for other applications, measuring electrode 12 may take any suitable form.

Reference electrode 14 includes a piece of silver wire plated with silver chloride in contact with a concentrated solution of potassium chloride held in a glass or plastic tube. However, the selection of material for the reference electrode wire as well as the fill solution can also vary depending on the application. Reference electrode 14 includes flowing liquid junction 22 which fluidically couples fill solution 24 disposed within reference electrode 14 to sample solution 18. The use of flowing liquid junction 22 allows cations and anions to pass evenly allowing reference electrode 14 to have a fairly stable junction potential.

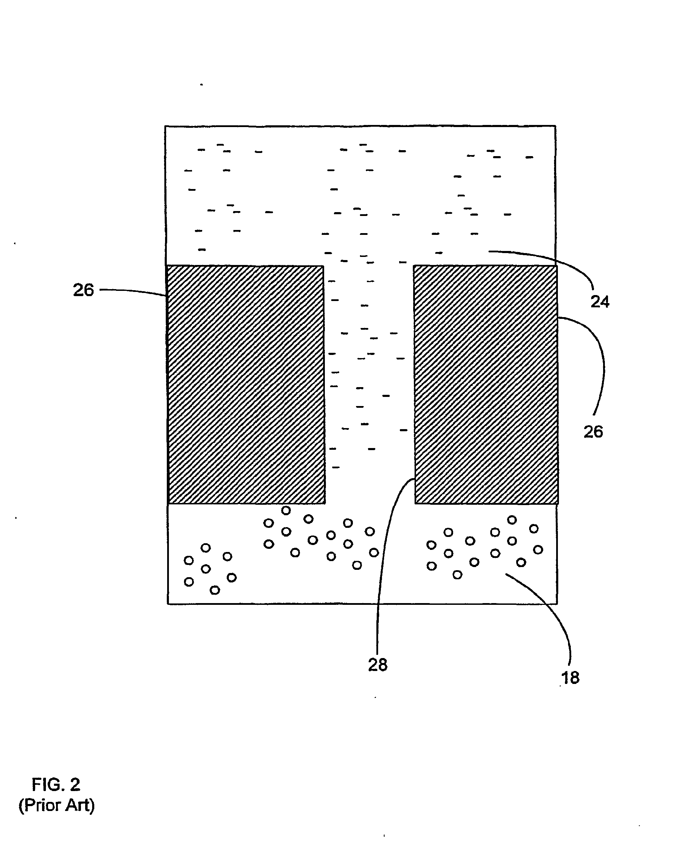

FIG. 2 is a diagrammatic view of a flowing liquid junction of a reference electrode of an electrochemical cell in accordance with the prior art. FIG. 2 illustrates a portion of an endcap 26 having a narrow flow passageway 28 that fluidically communicates between an interior of the reference electrode containing fill solution 24 and an exterior of the reference electrode exposed to sample 18. The flowing liquid junction is in the form of a relatively constant diameter bore, such as provided by a capillary. It is also known to provide a plurality of such passageways using a porous material having a pore diameter that allows for fluidic communication between the reference fill solution 24 and the sample solution 18. However, in both such circumstances, the passageway itself is believed to have a relatively constant or irregular diameter hole(s) that extends from fill solution 24 to sample solution 18.

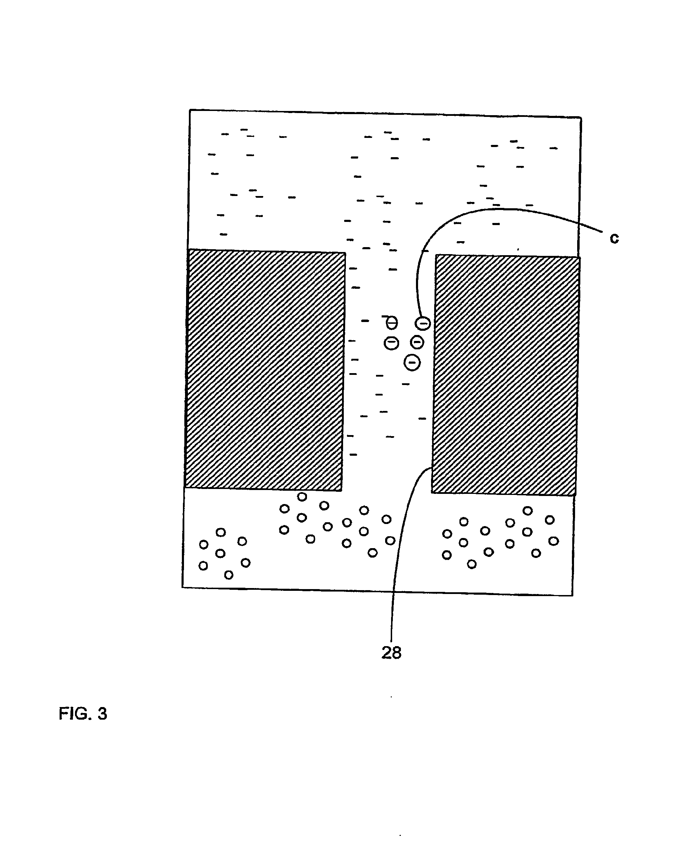

FIG. 3 is a diagrammatic view illustrating the flowing liquid junction of FIG. 2 in a clogged, or fouled condition. Particles, or solids 30 have aggregated within flow passageway 28 and obstructed flow passageway 28 such that fluid communication therethrough is no longer possible. Plugging can generally come from at least two sources. Suspended solids in sample 18 can flow into passageway 28 and clog it. Additionally, plugging can be generated by solids resulting from a chemical reaction involving reference fill solution 24. One way that fouling has been addressed in the past is to provide a flowing liquid junction with a relatively large surface area. However, to achieve a relatively long service life of fill solution 24, the inner diameter of the flowing junction should generally be in the range of micrometers, or smaller. This design goal increases the clogging problems associated with flowing liquid junctions of the prior art.

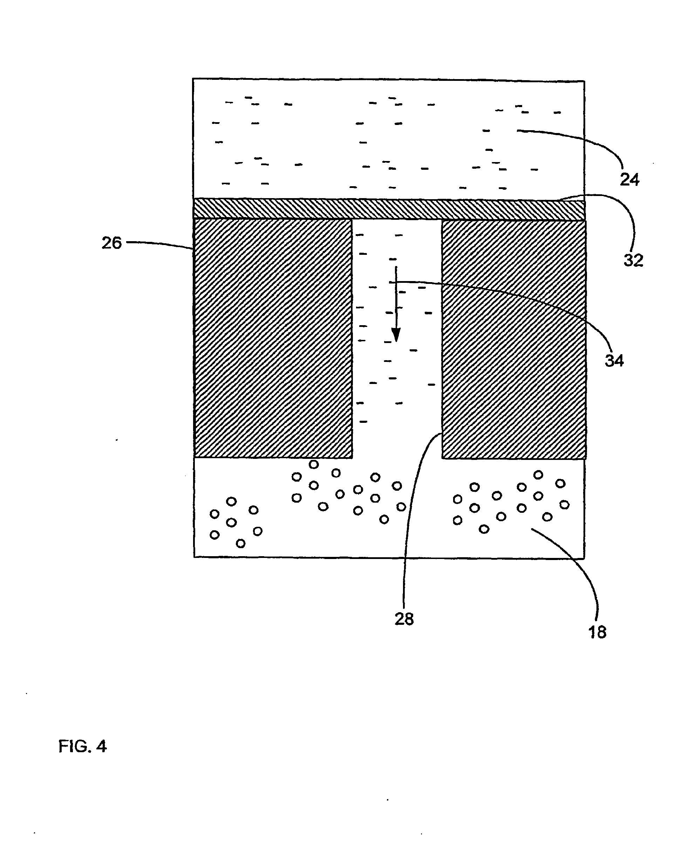

FIG. 4 is a diagrammatic view of a flowing liquid junction of a reference electrode of an electrochemical cell in accordance with a comparative example. FIG. 4 illustrates a flowing liquid junction having an internal passageway 28 that has a relatively constant internal diameter as it fluidically couples reference fill solution 24 to sample solution 18. However, disposed within the reference electrode, proximate an internal surface of endcap 26 of the electrode is filter 32. Filter 32 is a particle filter that is placed in the flow path before passageway 28. The flow path is illustrated diagrammatically at reference numeral 34. Filter 32 can be any suitable porous material as long as the pore size of filter 32 is smaller than the inner diameter of passageway 28. Filter 32 is a sub-micron porous polymer particle filter sheet such as that provided under the trade designation Supor^{®} supplied by Pall. Any particle that passes through filter 32 will not be sized to clog, or otherwise obstruct passageway 28, on its own.

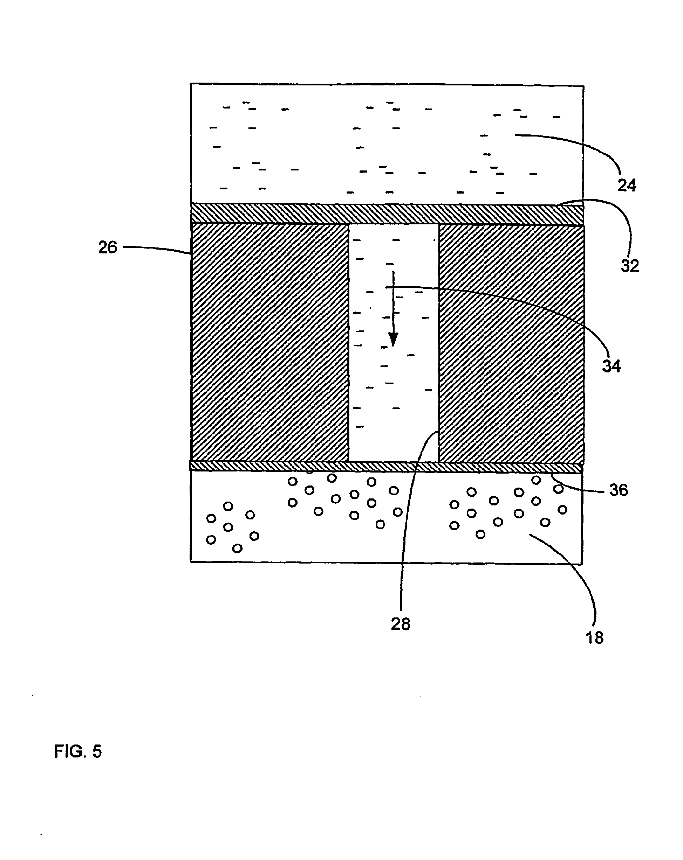

FIG. 5 is a diagrammatic view of a flowing liquid junction of a reference electrode of an electrochemical cell in accordance with another comparative example. FIG. 5 bears many similarities to FIG. 4, and reference numerals are numbered similarly. In FIG. 5, a second porous particle filter 36 is disposed proximate an external surface of endcap 26. Filter 36 is in contact with sample solution 18 and with passageway 28. Filter 36 may be identical to filter 32, or may be of any other suitable design, as long as it also has a pore size that is smaller than the inner diameter of passageway 28. Again, it is preferred that filter 36 be formed of a sub-micron porous polymer sheet material such as Supor^{®}.

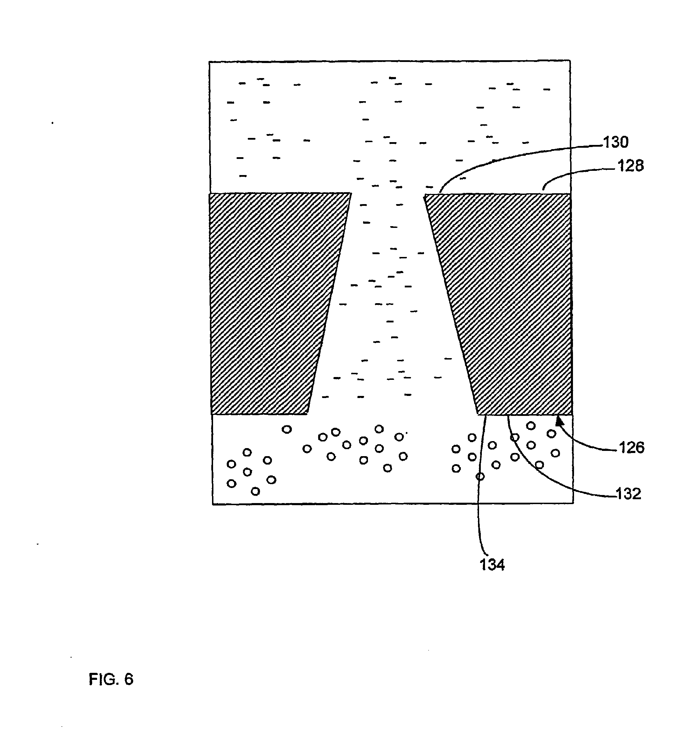

FIG. 6 is a diagrammatic view of a flowing liquid junction of a reference electrode of an electrochemical cell in accordance with an embodiment of the present invention. Endcap 126 is similar to endcap 26 (shown in FIG. 1) but is given a different reference numeral because its physical configuration proximate the flowing liquid junction is different. In particular, an internal surface 128 of endcap 126 has an aperture 130 of a first diameter. Additionally, endcap 126 has an external surface 132 having an aperture 134 with a diameter that is larger than aperture 130. Preferably, the internal diameter varies linearly between aperture 130 and aperture 134 to create a tapered flowing liquid junction. However, other configurations can be practiced in accordance with embodiments of the present invention as long as the diameter of the internal passageway at any point beyond aperture 130 is always larger than aperture 130. In a preferred embodiment, however, the flowing liquid junction is a tapered flowing liquid junction. Since the wall of the junction is tapered, aperture 134 is larger than aperture 130. Accordingly, if any particle manages to enter through aperture 130, the tapered wall makes it relatively easy for the flowing junction to essentially perform self-cleaning.

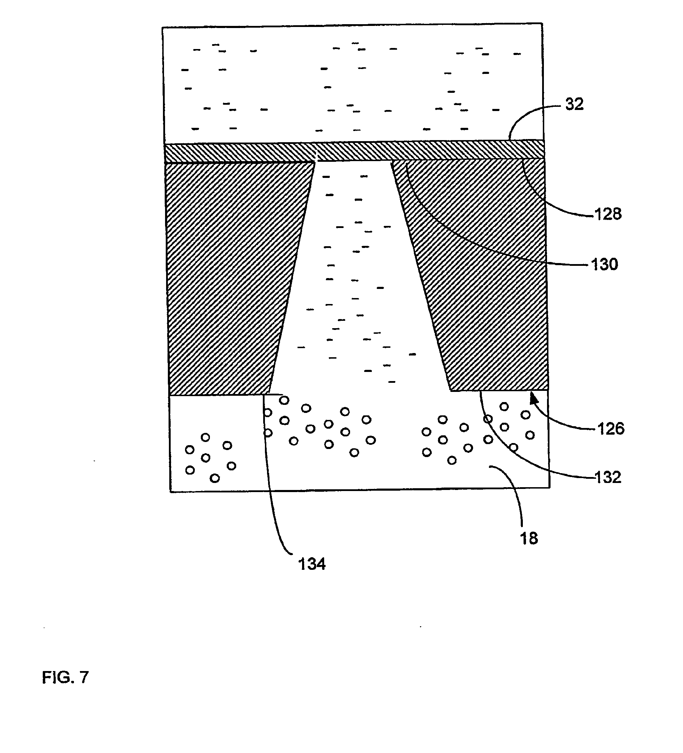

FIG. 7 is a diagrammatic view of flowing liquid junction of a reference electrode of an electrochemical cell in accordance with another embodiment of the present invention. The embodiment illustrated in FIG. 7 bears many similarities to that illustrated in FIG. 6, and like components are numbered similarly. FIG. 7 illustrates the flowing liquid junction also including a particle filter 32 disposed proximate internal surface 128. Filter 32 can be identical to that described above with respect to FIGS. 4 and 5. Filter 32 has a pore size that is selected to be smaller than the diameter of aperture 130. Thus, filter 32 helps to ensure that no particles that are larger than aperture 130 even reach aperture 130. However, if such as a particle does manage to get through filter 32, the tapered design of the flowing liquid junction helps ensure that the particle is swept cleanly through the passageway into the sample 18.

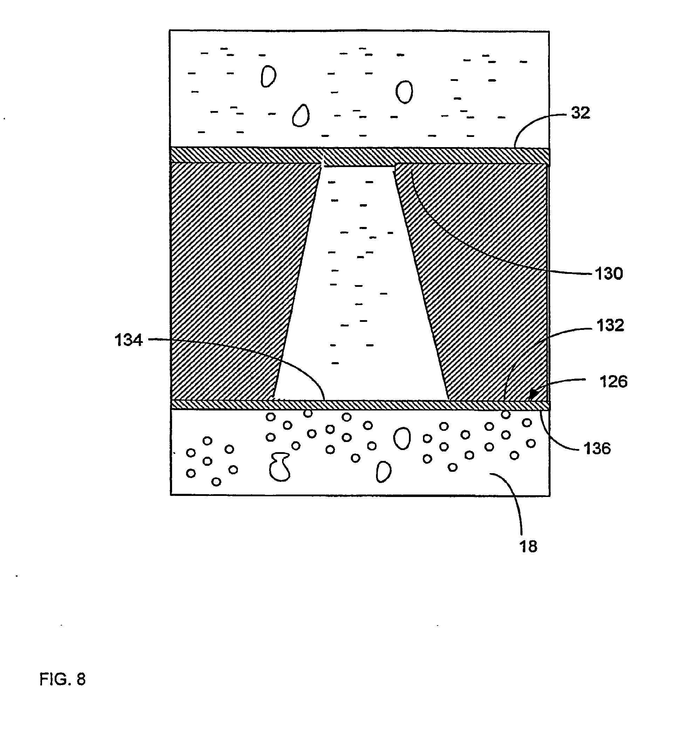

FIG. 8 is a diagrammatic view of a flowing liquid junction of a reference electrode of an electrochemical cell in accordance with yet another embodiment of the present invention. The embodiment illustrated in FIG. 8 bears many similarities to that described with respect to FIG. 7, and like components are numbered similarly.

The primary difference between the embodiment of FIG. 8 and that of FIG. 7 is that the embodiment illustrated in FIG. 8 utilizes yet another filter 136 disposed proximate surface 132. Preferably, filter 136 is a sub-micron porous polymeric sheet material, such as Supor^{®}, that has a maximum pore size that is smaller than the diameter of aperture 130.

Embodiments of the present invention are believed to provide the benefits of the extended operating lifetimes associated with reference electrodes that use flowing liquid junctions, while also providing the stability of the reference potential enjoyed by such flowing liquid junctions. Moreover, embodiments of the present invention are less susceptible to clogging, or similar forms of fouling than liquid junctions of the prior art.

Although the present invention has been described with reference to preferred embodiments, workers skilled in the art will recognize that changes may be made in form and detail without departing from the scope of the invention.

## Claims

1. An electrochemical cell comprising:
a measurement electrode (12) disposed to contact a sample (18);
a reference electrode (14) disposed to contact the sample, the reference electrode having a fill fluid (24) disposed therein and having a flowing liquid junction that fluidically couples the fill fluid to the sample;
an endcap (126) having a bore forming a first aperture (130) proximate an interior of the reference electrode, a second aperture (134) proximate the sample, and a passageway between the first and second apertures; wherein all cross sections of the passageway have a diameter that is greater than a diameter of the first aperture;
such that the flowing liquid junction is at least partially comprised bv the passageway and is configured to inhibit blockage therethrough.

2. The electrochemical cell of claim 1, wherein the measurement electrode and the reference electrode are maintained within a single housing.

3. The electrochemical cell of claim 1, and further comprising a temperature sensor disposed to contact the sample.

4. The electrochemical cell of claim 3, wherein the measurement electrode and the reference electrode are maintained within a single housing.

5. The electrochemical cell of claim 1, and further comprising a first particle filter disposed within the reference electrode proximate the flowing liquid junction, the first particle filter having a maximum pore size smaller than a diameter of the flowing liquid junction.

6. The electrochemical cell of claim 5, wherein the filter is a sub-micron particle filter.

7. The electrochemical cell of claim 5, and further comprising a second particle filter disposed to contact the sample, and located proximate the flowing liquid junction, the second particle filter having a maximum pore size smaller than a diameter of the flowing liquid junction.

8. The electrochemical cell of claim 7, wherein the filter is a sub-micron particle filter.

9. The electrochemical cell of claim 1, wherein the diameter of the passageway varies linearly from the first aperture to the second aperture.

10. The electrochemical cell of claim 9, wherein the flowing liquid junction is a tapered junction.

## Patentansprüche

1. Elektrochemische Zelle, die aufweist:
eine Messelektrode (12), die angeordnet ist, um eine Probe (18) zu kontaktieren;
eine Referenzelektrode (14), die angeordnet ist, um die Probe zu kontaktieren, wobei die Referenzelektrode ein Füllfluid (24) darin angeordnet hat und eine Flüssigkeitsbrücke hat, welche das Füllfluid mit der Probe fluidisch koppelt;
eine Endkappe (126) mit einer Bohrung, die eine erste Öffnung (130) nahe einem Inneren der Referenzelektrode bildet, einer zweiten Öffnung (134) nahe der Probe und einem Durchgang zwischen der ersten und der zweiten Öffnung, wobei alle Querschnitte des Durchgangs einen Durchmesser haben, der größer als ein Durchmesser der ersten Öffnung ist;
so dass die Flüssigkeitsbrücke wenigstens teilweise in dem Durchgang enthalten ist und konfiguriert ist, um eine Verstopfung durch diesen hindurch zu verhindern.

2. Elektrochemische Zelle nach Anspruch 1, wobei die Messelektrode und die Referenzelektrode in einem einzigen Gehäuse gehalten werden.

3. Elektrochemische Zelle nach Anspruch 1, die ferner einen Temperatursensor aufweist, der angeordnet ist, um die Probe zu kontaktieren.

4. Elektrochemische Zelle nach Anspruch 3, wobei die Messelektrode und die Referenzelektrode in einem einzigen Gehäuse gehalten werden.

5. Elektrochemische Zelle nach Anspruch 1, die ferner ein erstes Partikelfilter aufweist, das in der Referenzelektrode nahe der Flüssigkeitsbrücke angeordnet ist, wobei das erste Partikelfilter eine maximale Porengröße hat, die kleiner als ein Durchmesser der Flüssigkeitsbrücke ist.

6. Elektrochemische Zelle nach Anspruch 5, wobei das Filter ein Filter für Partikel im Submikrometerbereich ist.

7. Elektrochemische Zelle nach Anspruch 5, die ferner ein zweites Partikelfilter aufweist, das angeordnet ist, um die Probe zu kontaktieren und sich nahe der Flüssigkeitsbrücke befindet, wobei das zweite Partikelfilter eine maximale Porengröße hat, die kleiner als ein Durchmesser der Flüssigkeitsbrücke ist.

8. Elektrochemische Zelle nach Anspruch 7, wobei das Filter ein Filter für Partikel im Submikrometerbereich ist.

9. Elektrochemische Zelle nach Anspruch 1, wobei der Durchmesser des Durchgangs sich von der ersten Öffnung zu der zweiten Öffnung linear ändert.

10. Elektrochemische Zelle nach Anspruch 9, wobei die Flüssigkeitsbrücke ein konisch zulaufender Übergang ist.

## Revendications

1. Pile électrochimique comprenant :
une électrode de mesure (12) disposée de manière à être en contact avec un échantillon (18) ;
une électrode de référence (14) disposée de manière à être en contact avec l'échantillon, l'électrode de référence ayant un fluide de remplissage (24) disposé à l'intérieur et ayant une jonction liquide d'écoulement qui couple par voie fluide le fluide de remplissage à l'échantillon ;
un capuchon (126) comportant un trou alésé formant une première ouverture (130) à proximité de l'intérieur de l'électrode de référence, une deuxième ouverture (134) à proximité de l'échantillon, et une voie de passage entre les première et deuxième ouvertures, dans laquelle toutes les sections transversales de la voie de passage ont un diamètre qui est supérieur à un diamètre de la première ouverture ;
de manière à ce que la jonction liquide d'écoulement soit au moins partiellement constituée de la voie de passage et soit configurée de manière à en inhiber le colmatage.

2. Pile électrochimique selon la revendication 1, dans laquelle l'électrode de mesure et l'électrode de référence sont maintenues à l'intérieur d'un logement unique.

3. Pile électrochimique selon la revendication 1, et comprenant en outre une sonde de température disposée de manière à être en contact avec l'échantillon.

4. Pile électrochimique selon la revendication 3, dans laquelle l'électrode de mesure et l'électrode de référence sont maintenues à l'intérieur d'un logement unique.

5. Pile électrochimique selon la revendication 1, et comprenant en outre un premier filtre à particules disposé à l'intérieur de l'électrode de référence à proximité de la jonction liquide d'écoulement, le premier filtre à particules ayant une taille de pore maximale inférieure à un diamètre de la jonction liquide d'écoulement.

6. Pile électrochimique selon la revendication 5, dans laquelle le filtre est un filtre à particules submicronique.

7. Pile électrochimique selon la revendication 5, et comprenant en outre un deuxième filtre à particules disposé de manière à être en contact avec l'échantillon, et situé à proximité de la jonction liquide d'écoulement, le deuxième filtre à particules ayant une taille de pore maximale inférieure à un diamètre de la jonction liquide d'écoulement.

8. Pile électrochimique selon la revendication 7, dans laquelle le filtre est un filtre à particules submicronique.

9. Pile électrochimique selon la revendication 1, dans laquelle le diamètre de la voie de passage varie linéairement depuis la première ouverture jusqu'à la deuxième ouverture.

10. Pile électrochimique selon la revendication 9, dans laquelle la jonction liquide d'écoulement est une jonction conique.
